## Europäisches Patentamt

## European Patent Office

## Office européen des brevets

(11) Veröffentlichungsnummer : **0 072 517**
**B1**

(12) **EUROPÄISCHE PATENTSCHRIFT**

(45) Veröffentlichungstag der Patentschrift :
30.12.86

(51) Int. Cl.⁴ : **G 11 B 23/04**, G 11 B 23/02

(21) Anmeldenummer : **82107172.7**

(22) Anmeldetag : **09.08.82**

(54) **Spule für Videokassetten.**

(30) Priorität : **18.08.81 DE 3132582**

(43) Veröffentlichungstag der Anmeldung :
**23.02.83 Patentblatt 83/08**

(45) Bekanntmachung des Hinweises auf die Patenterteilung : **30.12.86 Patentblatt 86/52**

(84) Benannte Vertragsstaaten :
**DE FR GB IT NL**

(56) Entgegenhaltungen :
FR-A- 1 551 790
FR-A- 2 206 555
FR-A- 2 433 221
US-A- 3 583 656
US-A- 3 921 927

(73) Patentinhaber : **AGFA-GEVAERT Aktiengesellschaft**

**D-5090 Leverkusen 1 (DE)**

(72) Erfinder : **Pertzsch, Albert, Dipl.-Ing.**
**Leutstettener Strasse 29**
**D-8000 München 71 (DE)**
Erfinder : **Liepold, August**
**Kaltner Weg 12**
**D-8000 München 70 (DE)**
Erfinder : **Brunner, Hubert**
**Mühlgasse 4a**
**D-8911 Weil (DE)**

Jouve, 18, rue St-Denis, 75001 Paris, France

## Beschreibung

Die Erfindung betrifft eine Spule für Videokassetten, bestehend aus einer einteiligen Wickelnabe und einem Paar von Flanschen, wobei in einer zentrisch angeordneten Vertiefung des flachen Mittelabschnitts der Wickelnabe eine Kugel eingesetzt ist, die mit einer im Kasetteninneren angeordneten Blattfeder zusammenwirkt, welche die Spule in Richtung auf den Kassettenboden drückt.

Bei bekannten Videosystemen werden Kassetten mit zwei achsparallel angeordneten Spulenkörpern aus Kunststoff eingesetzt. Die Spulenkörper bestehen aus einem oder zwei Flanschen mit einer zentralen Wickelnabe, an der das Magnetband befestigt ist. Um für die einzelnen Zwecke eine einheitlich handzuhabende Spule zu erhalten ist ein Flansch stets mit der Wickelnabe verbunden, d. h. einteilig hergestellt, während der zweite Flansch, sofern er benötigt wird, aufsetzbar gestaltet ist. Dazu sind auf der Oberseite der Wickelnabe eine Anzahl von Vorsprüngen oder Stiften über die ganze Fläche verteilt, die mit dem zweiten Flansch, der ebenso entsprechend verteilte Löcher aufweist, in Eingriff gebracht werden können. Bei Videokassetten, bei denen die Bandwickel beim Einsetzen der Kassette in den Rekorder gegen den Druck einer elastischen Feder angehoben werden, befindet sich auf der Oberseite der Wickelnaben der einzelnen Spulen zentrisch ein Vorsprung in Kegelform, der höher ist als die übrigen erwähnten Ansätze oder Stifte. Die auf der Innenseite des Kassettendeckels angebrachte elastische Feder ist an den beiden Enden stets mit dem Mittelpunkt des Vorsprunges in Punktberührung. Dadurch wird eine stabile Lagerung der Bandspulen zwischen Blattfeder und geräteseitigen Antriebspindeln erzielt. Der Vorsprung ist während des Betriebs der Kassette durch das Drehen der Spulen einer ständigen Reibung ausgesetzt. Um Abtrieb zu vermeiden, ist es erforderlich dafür ein Material mit hoher Härte, Steifigkeit, Abriebwiderstand, günstigem Reibungskoeffizienten einzusetzen. Ein Material, das diesen Bedingungen gerecht wird, ist der Kunststoff Polyoxymethylen (POM). Ein Kunststoff dieser Art ist aber teuer und erhöht daher die Herstellungskosten der Spulen, die im allgemeinen im Spritzgußverfahren hergestellt sind. Man ist aus diesen Gründen dazu übergegangen, die Spulen in zwei Teilen zu fertigen. Ein Teil der Spule, nämlich Wickelnabe und ein Flansch, besteht aus dem harten und teueren Material und der zweite Flansch aus billigerem Kunststoff (siehe DE-OS 2 932 256). Spulen mit zwei Flanschen, wie sie für Videokassetten vom VHS-Typ verwendet werden, werden nach wie vor einteilig hergestellt und zwar nur aus dem teueren Kunststoff. Ferner ist in DE-OS 2 441 386 eine Spule für Videokassetten beschrieben in der in einer Vertiefung in einer Wand der Wickelnabe eine Kugel aus Kunstharz hineingedrückt ist, wobei zur Erleichterung des Ersatzes der Kunststoffkugel im Fall einer Beschädigung sich eine Bohrung durch die genannte Wand in die Vertiefung erstreckt, um mittels eines nadelartigen Werkzeugs durch die Bohrung hindurch die Kugel zu entfernen.

Die Aufgabe der Erfindung besteht nun darin, eine Spule für Videokassetten mit einem Paar von Flanschen zu schaffen, deren Herstellungskosten gegenüber dem derzeitigen Stand durch Reduzierung des Verbrauchs an teurem abriebfesten Kunststoff gesenkt werden können.

Diese Aufgabe wird erfindungsgemäß gelöst durch eine Spule für Videokassetten, bestehend aus einer einteiligen Wickelnabe und einem Paar von Flanschen, wobei in einer zentrisch angeordneten Vertiefung des flachen Mittelabschnitts der Wickelnabe eine Kugel eingesetzt ist, die mit einer im Kasetteninneren angeordneten Blattfeder zusammenwirkt, welche die Spule in Richtung auf den Kassettenboden drückt, wobei die Kugel in einem hohlzylindrischen Vorsprung eingeklemmt ist, der axial und zentrisch auf der Oberseite der Wickelnabe angeformt ist und die Kugel aus einem härteren Kunststoffmaterial als die restliche Spule besteht. Die Spulen selbst bestehen aus einem anderen, weniger harten als für den kugelförmigen Körper verwendeten Kunststoff. Die aus dem Vorsprung überstehende Kugelkalotte überragt gegebenenfalls andere auf der Oberseite angeformte Vorsprünge.

Mit der Erfindung ist die Verwendung eines teueren Kunststoffes auf den Teil der Spule beschränkt, der allein den Forderungen nach Abriebfestigkeit in der Kassette genügen muß. Das Einsetzen der Kugel erfolgt durch einfaches Eindrücken in den hohlzylindrischen Vorsprung. Der gesamte andere Spulenkörper, nämlich Wickelnabe, Flansche, kann aus anderen, billigeren Kunststoffen wie ABS-Copolymerisaten, Polystyrol und ähnlichem hergestellt sein. Die Herstellungskosten einer Videospule mit den erfindungsgemäßen Merkmalen lassen sich dadurch stark reduzieren. Ein Vorteil der Erfindung ist aber auch darin zu sehen, daß die Flansche aus Kunststoffen wie ABS-Copolymerisaten eine gleichmäßigere Dicke über das ganze Profil besitzen, da sie sich besser spritzgußtechnisch verarbeiten lassen. Spulen aus POM-Kunststoff hingegen zeigen oftmals Dickeschwankungen über das ganze Profil vor allem auf der Innenseite des Flansches, was sich ungünstig auf den Bandwickel auswirkt.

Die Erfindung wird anhand von Zeichnungen näher erläutert und zwar zeigen :

Figur 1 eine handelsübliche Video-Kassette mit Spule und Andruckfeder im Längsschnitt

Figur 2 eine perspektivische Ansicht einer erfindungsgemäßen Videospule mit zentrisch angeordnetem hohlzylindrischem Vorsprung

Figur 3 einen Querschnitt einer erfindungsgemäßen Videospule mit in den hohlzylindrischen Ansatz eingesetzter Kugel

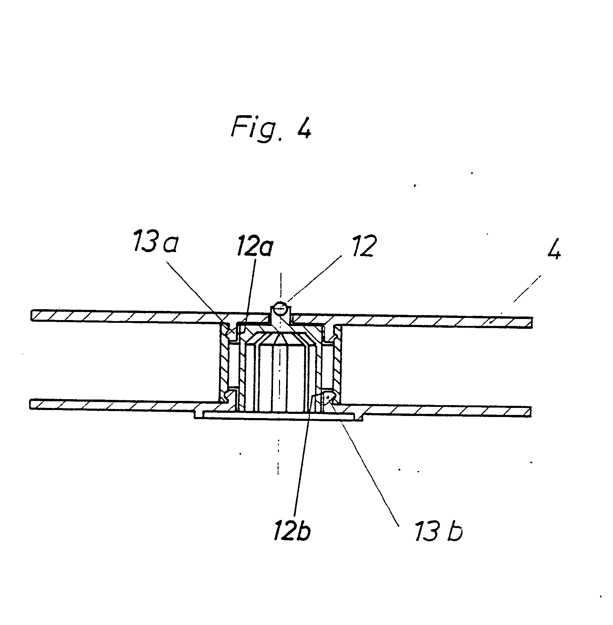

Figur 4 Querschnitt durch eine erfindungsgemäße Spule mit aufgesetzten Flanschen.

0 072 517

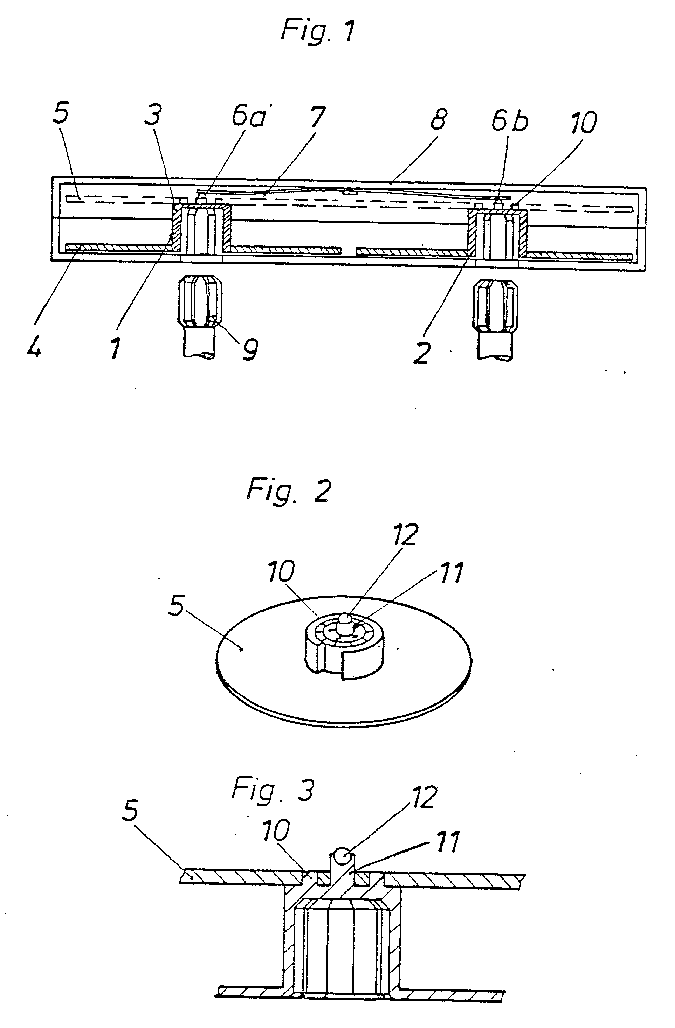

Fig. 1 zeigt im Längsschnitt eine Videokassette vom Typ VHS mit eingesetzten coaxial angeordneten Spulen (1, 2). Diese setzen sich jeweils aus einer Wickelnabe (3) zum Aufwickeln des Magnetbandes und zwei Flanschen (4, 5), die am oberen und unteren Ende der Wickelnaben sitzen, zusammen. Der obere Flansch ist in der Figur mit gestrichelten Linien dargestellt und wird wielfach in der Praxis erst nach dem Aufwickeln des Bandes auf die Wickelnabe aufgesetzt. Auf der Oberseite der Wickelnabe befindet sich in der Mitte ein kegelförmiger Vorsprung (6a, 6b), der mit einer Blattfeder (7) in ständiger Berührung steht. Die Blattfeder ist auf der Innenseite des Kassettendeckels (8) befestigt. Beim Einsetzen der Kassette heben die Antriebsspindeln (9), die in die hohlen Wickelnaben eingreifen, die Spulen vom Kassettenboden ab und legen diese beim Entnehmen aus dem Gerät wieder auf den Kassettenboden an. Neben dem Vorsprung können noch andere Stifte (10) auf der Oberseite der Wickelnabe verteilt sein, die dazu dienen, den zweiten Flansch über entsprechende Löcher mit der Wickelnabe zu verbinden. Der kegelförmige Vorsprung muß daher gegenüber diesen Stiften etwas erhöht ausgebildet sein, um mit der Feder einwandfrei in Berührung bleiben zu können. Wie erwähnt, unterliegt der Vorsprung einer besonders hohen und ständigen Reibung, so daß dieses Teil aus besonders abriebfestem Kunststoff hergestellt sein muß. Da aber andererseits die Spulen möglichst einteilig hergestellt sein sollen, um Herstellungs- und Konfektionierungsaufwand möglichst gering zu halten, wurden sie bisher aus dem abriebfesten und teueren Kunststoff hergestellt.

In Fig. 2 und 3 wird die erfindungsgemäße Ausgestaltung der Spule gezeigt, die den Verbrauch an teurem Kunststoff auf ein Minimum reduziert. Im Mittelpunkt der Oberfläche der Wickelnabe befindet sich erfindungsgemäß ein hohlzylindrischer, nach außen offener Vorsprung (11), der eine Kugel (12) aus abriebfestem Kunststoff, z. B. aus Polyoxymethylen, aufnimmt. Sie wird durch einfaches Eindrücken befestigt. Der Vorsprung mit der herausstehenden Kalotte ist etwas höher als die ggf. sonst auf der Oberseite angeordneten Stifte (10) zur Aufnahme eines zweiten Flansches. Die Spule mit Ausnahme der Kugel besteht aus einem sonst in üblicher Weise bei Audiospulen verwendeten billigerem Kunststoff, z. B. aus Acrylnitrilbutadienstyrol-Copolymerisat oder schlagfestem Polystyrol. Neben der Reduzierung an teurem Kunststoffmaterial besteht ein weiterer Vorteil darin, daß zum Unterschied einer aus POM hergestellten Spule durch Einsatz von beispielsweise Acrylnitrilstyrolpolymerisat für die Spule die Flächen der Flansche von gleichmäßiger Dicke sind, wie es bei Verwendung von Polyoxymethylenkunststoff nicht möglich ist. Dies führt zu einwandfreien Bandwickeln beim Auf- und Abwickeln des Videobandes. Nun ist es auch praktisch möglich, die Spulen kostengünstig mehrteilig zu fertigen und zwar die Wickelnaben und Flansche getrennt voneinander als Einzelteile. Dies hat den Vorteil, daß beim Aufwickeln des Magnetbandes an der Trennmaschine, an der die von der Gießmaschine ankommende beschichtete, breite Magnetfolie in entsprechende Formate z. B. 1/2″ geschnitten und die erhaltenen Bänder auf Wickelnaben in geeigneter Länge gewickelt werden, das Band nicht mehr mit den Flanschen touchiert und die Kanten nicht deformiert werden können. Der Wickelvorgang gegenüber dem bei Verwendung von mit Flanschen versehenen Spulen, ist dadurch wesentlich erleichtert. Die Wickelnabe mit dem erfindungsgemäßen Vorsprung kann zur Befestigung der Flansche an einem oder an beiden Enden am Innenumfang eine umlaufende Rille (12a, 12b) aufweisen, in die ein Ringwulst (13a, 13b) des entsprechend ausgebildeten Flansches einschnappt. Bei Verwendung eines derartigen Schnappverschlusses kann auf die Stifte (10) auf der Oberfläche der Wickelnabe zum Aufsetzen und zum Vernieten eines Flansches verzichtet werden.

## Patentansprüche

1. Spule für Videokassetten bestehend aus einer einteiligen Wickelnabe und einem Paar von Flanschen, wobei in einer zentrisch angeordneten Vertiefung des flachen Mittelabschnitts der Wickelnabe eine Kugel eingesetzt ist, die mit einer im Kasetteninneren angeordneten Blattfeder zusammenwirkt, welche die Spule in Richtung auf den Kassettenboden drückt, dadurch gekennzeichnet, daß die Kugel (12) in einem hohlzylindrischen Vorsprung (11) eingeklemmt ist, der axial und zentrisch auf der Oberseite der Wickelnabe (3) angeformt ist und die Kugel aus einem härteren Kunststoffmaterial als die restliche Spule besteht.

2. Spule nach Anspruch 1, dadurch gekennzeichnet, daß die Kugel (12) aus Polyoxymethylen und die restliche Spule aus einem Acrylnitrilbutadienstyrol-Copolymerisat besteht.

3. Spule nach Anspruch 1, dadurch gekennzeichnet, daß die aus dem Vorsprung (11) überstehende Kugelkalotte andere, an der Oberseite angeformte Stifte (10) überragt.

4. Spule nach Anspruch 3, dadurch gekennzeichnet, däß diese aus einer Wickelnabe und einem Paar von Flanschen zusammengesetzt ist, wobei die Wickelnabe an einem oder an beiden Enden am Innenumfang je eine umlaufende Rille (12a, 12b) aufweist, in die ein Ringwulst (13a, 13b) eines der Flansche bzw. des jeweiligen Flansches einschnappbar ist.

## Claims

1. Spool for video cassettes consisting of a one-piece winding hub and a pair of flanges, a ball being inserted in a centrally arranged indentation in the flat middle section of the winding hub, which ball interacts with a leaf spring which is

3

arranged in the interior of the cassette and presses the spool towards the cassette base, characterised in that the ball (12) is clamped in a hollow-cylindrical projection (11) which is formed axially and centrally on the upper side ot the winding hub (3) and the ball consists of a harder plastic material than the rest of the spool.

2. Spool according to Claim 1, characterised in that the ball (12) consists of polyoxymethylene and the rest of the spool consists of an acrylonitrile-butadiene-styrene copolymer.

3. Spool according to Claim 1, characterised in that the spherical cup protruding from the projection (11) projects above other pins (10) formed on the upper side.

4. Spool according to Claim 3, characterised in that it is composed of a winding hub and a pair of flanges, the winding hub having a circular groove (12a, 12b) on its inside circumference at one or each of its two ends, into which an annular collar (13a, 13b) of one of the flanges, or of the respective flange, can be snapped.

**Revendications**

1. Bobine pour cassette vidéo constituée d'un moyeu d'enroulement en une pièce et d'une paire de flasques, étant précisé que, dans un creux disposé dans l'axe de la portion médiane plate du moyeu d'enroulement est insérée une bille qui collabore avec un ressort à lame qui est disposé à l'intérieur de la cassette et qui pousse la bobine en direction de la base de la cassette, caractérisée en ce que la bille (12) est coincée dans une saillie (11) en cylindre creux venue de forme, dans l'axe et selon la direction axiale, sur la face supérieure du moyeu d'enroulement (3) ; et en ce que la bille est constituée d'un matériau plastique plus dur que le reste de la bobine.

2. Bobine selon la revendication 1, caractérisée en ce que la bille est en polyoxyméthylène et le reste de la bobine en copolymérisat acrylonitrile-butadiène-styrène.

3. Bobine selon la revendication 1, caractérisée en ce que la calotte sphérique qui déborde de la saillie (11) dépasse d'autres pointes (10) venues de forme sur la face supérieure.

4. Bobine selon la revendication 3, caractérisée en ce qu'elle est composée d'un moyeu d'enroulement et d'une paire de flasques, étant précisé que le moyeu d'enroulement présente, à une extrémité ou aux deux, à la périphérie intérieure, respectivement un sillon périphérique (12a, 12b) dans lequel peut se clipser un bourrelet annulaire (13a, 13b) de l'un des flasques ou de chaque flasque.

0 072 517

Fig. 1

Fig. 2

Fig. 3

1

Fig. 4